# EUROPEAN PATENT APPLICATION

(11) **EP 4 763 449 A1**
(43) Date of publication of application: **24.06.2026**
(21) Application number: 24882812.1
(22) Date of filing: 23.10.2024
(51) Int. Cl.: B26D 1/09, B26D 7/01, B26D 7/00, H01M 4/04

(54) **POUCH CUTTING DEVICE**

(30) Priority: 23.10.2023 KR 20230142495
(71) Applicant: LG Energy Solution, Ltd., Seoul 07335 (KR)
(72) Inventor: KIM, Ji Won, Daejeon 34122 (KR)
(74) Representative: Goddar, Heinz J.
(86) International application number: PCT/KR2024/016174
(87) International publication number: WO 2025/089785

(57) **Abstract**

A pouch cutting apparatus according to the present disclosure is a pouch cutting apparatus for cutting a pouch including a cup portion and a side portion extended from the cup portion, and includes a cutter including a blade portion having a smaller cross sectional area toward an end portion that is configured to cut the side portion and a guide located adjacent to the blade portion to hold the side portion while the cutter cuts the side portion.

## Description

### TECHNICAL FIELD

### CROSS-REFERENCE TO RELATED APPLICATIONS

The present application claims priority to Korean Patent Application No. 10-2023-0142495 filed on October 23, 2023 in the Republic of Korea, the disclosure of which is incorporated herein by reference.

### TECHNICAL FIELD

The present disclosure relates to a pouch cutting apparatus. More particularly, the present disclosure relates to a pouch cutting apparatus for cutting a side portion of a pouch.

### BACKGROUND ART

With the technology development and growing demand for electric vehicles and mobile devices, the demand for secondary batteries as an energy source is increasing. As opposed to primary batteries that can only be used once, secondary batteries can be reused through charging. A secondary battery includes a positive electrode and a negative electrode. When oxidation of a metal occurs at the positive electrode, electricity is produced by movement of electrons released from the metal. The oxidized metal at the positive electrode moves to the negative electrode through an electrolyte and reduction occurs at the negative electrode.

To manufacture the secondary battery, first, an electrode active material slurry is applied to a positive current collector and a negative current collector to manufacture the positive electrode and the negative electrode, and the positive electrode and the negative electrode are stacked on both sides of a separator to form an electrode assembly. Additionally, the electrode assembly is received in a battery case, followed by electrolyte injection and sealing.

Secondary batteries are classified into a pouch type and a can type according to the material of the case accommodating the electrode assembly. The pouch-type secondary battery is formed by accommodating the electrode assembly in the pouch made of flexible polymer. Additionally, the can-type secondary battery is formed by accommodating the electrode assembly in the case made of metal or plastic.

The pouch, i.e., the battery case of the pouch-type secondary battery is manufactured by pressing a pouch film having flexibility to form a cup portion. Additionally, when the cup portion is formed, the electrode assembly is received in an electrode accommodation space of the cup portion, and the pouch is sealed by joining the edge of the cup portion to form a side portion.

In this instance, as a larger number of secondary batteries are loaded on a battery module case, there is a need to reduce the length of the secondary battery. To reduce the width of the secondary battery, it is necessary to cut out unnecessary parts of the side portion at the edge of the pouch.

While cutting the unnecessary parts of the side portion, curl may occur in the side portion. When curl occurs in the side portion, the side portion having a length that is different from a preset length of the side portion may be formed, and when sealing the side portion in the subsequent process, the corresponding side portion may be unsized. To prevent this, the battery case having a big difference from the preset size of the side portion may be discarded. However, discarding the battery case may result in low production yield of the battery case and higher production cost of the battery case. Further, when a secondary battery is produced and released using any battery case that is overlooked in the process of inspecting battery cases that will be discarded, the produced secondary battery may have poor quality.

### SUMMARY

### TECHNICAL PROBLEM

The present disclosure is designed to solve the above-described problems, and therefore the present disclosure is directed to providing a pouch cutting apparatus for preventing curl from occurring in a side portion.

The present disclosure is further directed to providing a pouch cutting apparatus for preventing collision between a guide and a cutter due to overlapping paths when the guide is used to prevent curl from occurring in the side portion.

The technical problems to be solved by the present disclosure are not limited to the aforementioned technical problems, and these and other technical problems will be clearly understood by persons having ordinary skill in the technical field pertaining to the present disclosure from the following description.

### TECHNICAL SOLUTION

A pouch cutting apparatus according to an embodiment of the present disclosure is a pouch cutting apparatus for cutting a pouch including a cup portion and a side portion extended from the cup portion, and includes a cutter including a blade portion having a smaller cross sectional area toward an end portion to cut the side portion and a guide located adjacent to the blade portion to hold the side portion while the cutter cuts the side portion.

The guide may include a first guide and a second guide located in contact with surfaces located at opposite sides of the side portion, respectively.

The cutter may cut the side portion after the guide holds the side portion.

The guide may be located closer to the cup portion than the blade portion.

The guide may be configured to move to a holding preparation position adjacent to the cup portion and a holding position adjacent to the blade portion, and the cutter may cut the side portion while the guide is in the holding position.

The guide may move in contact with the side portion while the guide moves from the holding preparation position to the holding position.

The guide may slidably move while the guide moves from the holding preparation position to the holding position.

The guide may be extended in a length direction, and a length of the side portion in the length direction of the guide may be equal to or smaller than the length of the guide.

The cutter may move in a cutting direction to cut the side portion while the guide holds the side portion, the cutting direction being perpendicular to an extension direction of the side portion.

The cutter may have a guide accommodation space for accommodating the guide, and the guide may be inserted into the guide accommodation space while the cutter moves in the cutting direction.

The guide accommodation space may have a height that is equal to or larger than a height of the guide in the cutting direction.

The guide accommodation space may have a width corresponding to a width of the guide.

The guide may be accommodated in a guide accommodation space of the cutter to move with the cutter before holding the side portion.

The guide may move in the cutting direction along an extension direction of the guide accommodation space to hold the side portion.

The side portion may include a lead sealing portion extended along a short side of the cup portion and a degassing sealing portion extended along a long side of the cup portion, the lead sealing portion may include a pair of lead sealing portions extended from opposite sides of the cup portion, respectively, and the guide may include a pair of guides to hold the pair of lead sealing portions, respectively.

A pouch cutting apparatus according to an embodiment of the present disclosure is a pouch cutting apparatus for cutting a pouch including a cup portion and a side portion extended from the cup portion, and includes a cutter configured to cut the side portion and a guide configured to contact the side portion to hold the side portion while the cutter cuts the side portion, wherein the guide may be configured to move to a holding preparation position adjacent to the cup portion and a holding position adjacent to the cutter to hold the side portion while the cutter cuts the side portion.

The guide may move in contact with the side portion while the guide moves from the holding preparation position to the holding position.

The guide may slidably move while the guide moves from the holding preparation position to the holding position.

The guide may have a width that is equal to or larger than a width of the side portion.

A pouch cutting apparatus according to an embodiment of the present disclosure is a pouch cutting apparatus for cutting a pouch including a cup portion and a side portion extended from the cup portion, and includes a cutter configured to cut the side portion and a guide configured to contact the side portion to hold the side portion while the cutter cuts the side portion, wherein the guide is accommodated in a guide accommodation space of the cutter to move with the cutter before holding the side portion.

### ADVANTAGEOUS EFFECTS

As the pouch cutting apparatus according to the present disclosure includes the guide located adjacent to the cutter to hold the side portion while the cutter cuts the side portion, it may be possible to prevent curl from occurring in the side portion.

As the pouch cutting apparatus according to the present disclosure is configured to move from the holding preparation position to the holding position adjacent to the cutter, it may be possible to prevent curl from occurring in the side portion.

As the guide of the pouch cutting apparatus according to the present disclosure is accommodated in the guide accommodation space of the cutter to move with the cutter before holding the side portion, it may be possible to prevent collision between the guide and the cutter due to the overlapping paths.

The effects that can be obtained from the present disclosure are not limited to the aforementioned effects, and these and other effects will be clearly understood by persons having ordinary skill in the technical field pertaining to the present disclosure from the following description.

### BRIEF DESCRIPTION OF THE DRAWINGS

FIG. 1 is an assembly diagram of a secondary battery of the present disclosure.
FIG. 2 is a perspective view showing a battery case of the secondary battery shown in FIG. 1 before it is cut by a conventional pouch cutting apparatus.
FIG. 3 is a schematic diagram showing the battery case and the conventional pouch cutting apparatus shown in FIG. 2.
FIG. 4 is a plan view of a battery case showing a cutting line that is cut by the conventional pouch cutting apparatus shown in FIG. 3.
FIG. 5 is a graph showing L1-0 length distribution of the battery case when the battery case shown in FIG. 2 is cut by the cutting line.
FIG. 6 is a graph showing L2-0 length distribution of the battery case when the battery case shown in FIG. 2 is cut by the cutting line.
FIG. 7 is a perspective view showing that the battery case shown in FIG. 1 is cut by a pouch cutting apparatus according to a first embodiment.
FIG. 8 is a cross-sectional view showing the battery case shown in FIG. 7 and the pouch cutting apparatus according to the first embodiment.
FIG. 9 is a plan view showing the cut battery case when the battery case is cut by the pouch cutting apparatus according to the first embodiment shown in FIG. 8.
FIG. 10 is a plan view showing that a guide of the pouch cutting apparatus shown in FIG. 7 is in a holding preparation position.
FIG. 11 is a plan view showing that the guide of the pouch cutting apparatus shown in FIG. 10 is in a holding position.
FIG. 12 is a side view showing that the guide of the pouch cutting apparatus shown in FIG. 10 is in the holding preparation position.
FIG. 13 is a side view showing that a guide of a pouch cutting apparatus according to a second embodiment is in the holding preparation position.
FIG. 14 is a side view showing that the guide of the pouch cutting apparatus shown in FIG. 13 is in the holding position.
FIG. 15 is a side view showing a pouch cutting apparatus according to a third embodiment and a battery case.
FIG. 16 is a side view showing a pouch cutting apparatus according to a fourth embodiment and a battery case.
FIG. 17 is a side view showing a pouch cutting apparatus according to a fifth embodiment and a battery case.
FIG. 18 is a side view showing a pouch cutting apparatus according to a sixth embodiment and a battery case.
FIG. 19 is a side view showing a pouch cutting apparatus according to a seventh embodiment and a battery case.
FIG. 20 is a side view showing a pouch cutting apparatus according to an eighth embodiment and a battery case.
FIG. 21 is a plan view showing a pouch cutting apparatus according to a ninth embodiment and a battery case.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other embodiment, and are not intended to limit the corresponding elements in another aspect (for example, importance or order).

When an element (for example, a first element) is referred to as being "coupled" or "connected" to another element (for example, a second element) with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes the cases in which the elements are directly connected, coupled, supported or contacted with each other and they are indirectly connected, coupled, supported or contacted with each other through a third element.

When an element is referred to as being located "on" another element, the element can contact the other element and another element may be present between them.

Meanwhile, the terms "up-down direction", "lower", and "front-rear direction" as used herein are defined on the basis of the drawings, and the shape and location of each element is not limited by these terms.

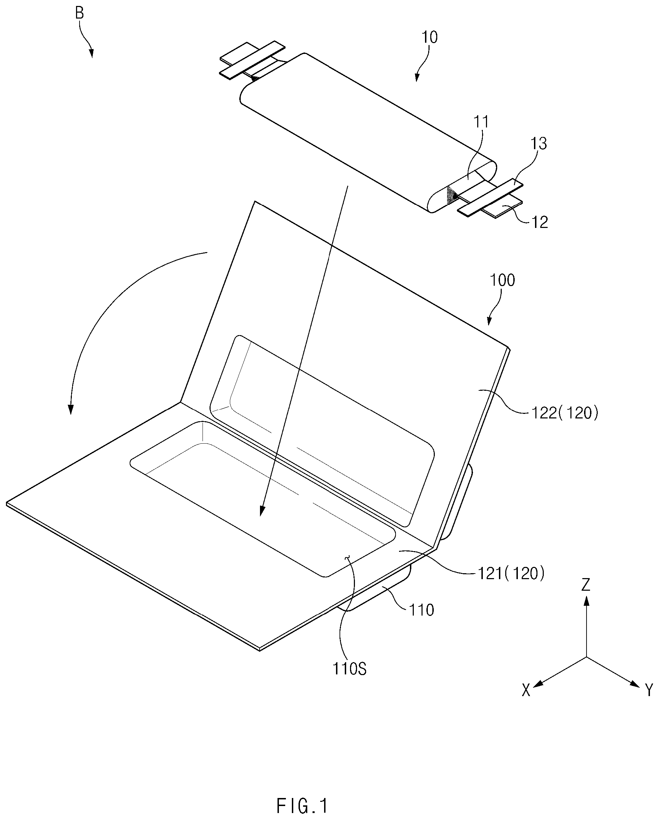

Specifically, as shown in FIG. 1, a direction in which an electrode assembly 10 moves to be accommodated in an electrode accommodation space 110S may be defined as lower, a direction in which an electrode lead 12 is extended may be defined as side, and on the basis of the definition, upper, rear, left and right may be defined.

Alternatively, +X direction may be defined as front, +Y direction may be defined as right, and +Z direction may be defined as upper, and on the basis of the definition, rear, left and right may be defined.

Hereinafter, the embodiments according to the present disclosure will be described in detail with reference to the accompanying drawings.

### First embodiment

FIG. 1 is an assembly diagram of a secondary battery B of the present disclosure.

As shown in FIG. 1, the secondary battery B may include the electrode assembly 10. The electrode assembly 10 may be formed by stacking an electrode (not shown) and a separator (not shown) in an alternating manner. First, a slurry including an electrode active material, a binder and a plasticizer may be applied to a positive current collector and a negative current collector to manufacture positive and negative electrodes, respectively. Additionally, the separators may be stacked between the electrodes to form the electrode assembly 10, the electrode assembly 10 may be inserted into a battery case 100, an electrolyte (not shown) may be injected into the battery case 100 and the battery case 100 may be sealed.

Specifically, the electrode assembly 10 may include the two types of electrodes, the positive electrode and the negative electrode, and the separator interposed between the electrodes to insulate them from each other. The electrode assembly 10 may come in a stack type, a jellyroll type, a stack and folding type and so on, according to the way of stacking the positive electrode, the negative electrode and the separator. The two types of electrodes, that is, the positive electrode and the negative electrode may have a structure in which the active material slurry is applied to the metal foil or mesh-type electrode current collector including aluminum and copper, respectively. The slurry may be generally formed by mixing the particulate active material, an auxiliary conductive material, the binder and the plasticizer with an addition of a solvent. The solvent in the slurry may be removed in the subsequent process.

As shown in FIG. 1, the electrode assembly 10 may include an electrode tab 11. The electrode tab 11 may be connected to each of the positive electrode and the negative electrode of the electrode assembly 10, and be protruded outward from the electrode assembly 10 to become a path of movement of electrons between the inside and outside of the electrode assembly 10. Each of the plurality of electrode tabs 11 may be protruded in each different direction of the electrode assembly 10 but is not limited thereto, and each of the plurality of electrode tabs 11 may be protruded parallel to each other in the same direction or may be protruded in various directions. The electrode assembly 10 may include the electrode lead 12 connected to the electrode tab 11 to supply electricity to the outside of the secondary battery B. The electrode lead 12 may be connected to the electrode tab 11 by spot welding.

The electrode assembly 10 may include an insulation portion 13 surrounding a part of the electrode lead 12. The insulation portion 13 may be located between two parts of the battery case 100 to insulate the electrode lead 12 from the battery case 100.

The electrode tab 11 configured to have positive polarity may be referred to as a positive tab, and the electrode tab 11 configured to have negative polarity may be referred to as a negative tab. The electrode lead 12 configured to have positive polarity may be referred to as a positive lead, and the electrode lead 12 configured to have negative polarity may be referred to as a negative lead. One end of the electrode lead 12 may be connected to the electrode tab 11, and the other end may be protruded outward from the battery case 100. That is, the electrode lead 12 may include the positive lead connected, at one end, to the positive tab and extended in the direction in which the positive tab is protruded, and the negative lead connected, at one end, to the negative tab and extended in the direction in which the negative tab is protruded. Meanwhile, the other end of the positive lead and the negative lead may be protruded outward from the battery case 100. Accordingly, the positive lead and the negative lead may supply electricity produced inside of the electrode assembly 10 to the outside. Additionally, each of the positive tab and the negative tab may be extended toward different directions.

The materials of the positive lead and the negative lead may be different from each other. The positive lead may be made of aluminum that is the same as the positive current collector, and the negative lead may be made of copper or nickel coated copper that is the same as the negative current collector. Additionally, the part of the electrode lead 12 protruded outward from the battery case 100 may act as a terminal portion to electrically connect to an external terminal.

The battery case 100 may be made of a material having high flexibility to receive the electrode assembly 10 therein. When drawing a pouch film having flexibility using a punch (not shown), a part of the pouch film may be stretched to form a cup portion 110 having the pocket-shaped electrode accommodation space 110S, thereby manufacturing the battery case 100. The battery case 100 may be sealed, while accommodating the electrode assembly 10 such that the part of the electrode lead 12 is exposed.

For reference, the pouch film as used herein may be a word indicating an element in progress before completion of the battery case 100, and accordingly, the word indicated by the pouch film may have the meaning of the battery case 100 according to the context. Further, the battery case 100 may refer to the completed battery case 100, and may refer to the battery case 100 before completion. The meaning of the battery case 100 may be differently interpreted depending on the context.

When forming the cup portion 110 in the pouch film, only one cup portion 110 may be formed in one pouch film, but the present disclosure is not limited thereto, and two cup portions 110 may be formed in one pouch film by drawing them adjacent to each other. Thus, as shown in FIG. 1, the two adjacent cup portions 110 may be formed. Each cup portion 110 may have the same depth, but is not limited thereto, and the depth of each cup portion 110 may be different from each other. After the electrode assembly 10 is received in one cup portion 110, the battery case 100 may be folded with respect to an axis such that the cup portion 110 and the other cup portion 110 face each other. Accordingly, the other cup portion 110 may accommodate the electrode assembly 10 at the upper side. As the two cup portions 110 accommodate one electrode assembly 10, they may accommodate the thicker electrode assembly 10 than a single cup portion 110.

In addition, in the present disclosure, the pouch film may refer to a film before the battery case 100 is formed, and in the drawings, the reference numeral of the pouch film may be the same as the reference numeral of the battery case 100.

Additionally, the battery case 100 may be folded to form a folding portion connecting the two cup portions 110, and as the folding portion is formed by the folding and integrally connected, when the sealing process is performed later, the number of sides to seal may be reduced. Accordingly, it may be possible to speed up the process, and reduce the number of sealing processes. In particular, when the cross section of the cup portion 110 is close to a rectangular shape, the battery case 100 may be sealed by sealing the battery case 100 having the folding portion on three sides. However, when each of the two cup portions 110 is formed in each pouch film, in a state that the pouch films are located such that each cup portion 110 faces each other without a folded part, the edge of the battery case 100 may be sealed. In this case, when the cross section of the cup portion 110 is close to a rectangular shape, the battery case 100 may be sealed by sealing the battery case 100 on four sides. For convenience of description, the present disclosure will be described on the basis of the battery case 100 including the folding portion . However, the aspect of the present disclosure may be applied to the battery case 100 that does not include the folding portion.

When the electrode lead 12 is connected to the electrode tab 11 of the electrode assembly 10, and the insulation portion 13 is formed at a part of the electrode lead 12, the electrode assembly 10 may be accommodated in the electrode accommodation space 110S of the cup portion 110, and the other cup portion 110 may cover the electrode assembly 10. Subsequently, a part of a side portion 120 extended from the cup portion 110 on the other side than the side where the folding portion is located may be sealed, and the electrolyte may be injected into the electrode accommodation space 110S through the unsealed side portion 120, and after the injection of the electrolyte, the unsealed side portion 120 may be sealed.

The pouch film that forms the battery case 100 may include a plurality of layers. The following description is made based on the pouch film, but may be equally applied to the battery case 100 formed by the pouch film.

The pouch film may include a surface protective layer (not shown), a sealant layer (not shown) and a moisture barrier layer (not shown). The pouch film may further include a stretch assisting layer located on the moisture barrier layer.

The sealant layer may be made of a first polymer, formed in an innermost layer and come into direct contact with the electrode assembly 10. Here, the innermost layer may be the last layer in the direction toward the electrode assembly 10 on the basis of the moisture barrier layer. The sealant layer may have insulation because it directly contacts the electrode assembly 10.

As shown in FIG. 1, as the pouch film is folded with respect to a reference line, the pouch films that meet each other may be symmetrical with respect to a side where they meet each other. The pouch films in symmetry may be configured such that each sealant layer included in each pouch film contacts each other. When heat is applied to the pouch films that contact each other, because the sealant layer may include the polymer, the sealant layer of each of the pouch films that contact each other may be melted and joined to each other when heated. Accordingly, the side portion 120 of the battery case 100 may be formed, and the side portion 120 may be sealed by joining the sealant layers that meet each other.

In addition, as described above, before sealing the entire side portion 120, only a part of the side portion 120 may be sealed, and the electrolyte may be injected into the electrode accommodation space 110S through the unsealed part of the side portion 120. After the electrolyte is accommodated in the electrode accommodation space 110S, the unsealed part of the side portion 120 may be sealed, and charging and discharging may be repeated to activate the secondary battery B. An aging process for permeation of the electrolyte into the electrode may be performed at a time interval between charge and discharge. When this process is repeatedly performed, the electrical properties of the secondary battery B may be activated. During the activation process of the secondary battery B, gas may be produced inside the secondary battery B. The gas produced inside may move to the part of the side portion 120, gas located at the side portion 120 may be released through a hole, the side portion 120 close to the electrode may be sealed again, and a degassing process of trimming the side portion 120 of the area in which the hole is formed may be performed. The remaining side portion 120 having a predetermined width after cutting through the degassing process may be referred to as a degassing sealing portion 122. For reference, the side portions 120 joined with the electrode lead 12 interposed between them may be referred to as a lead sealing portion 121. That is, the side portion 120 may include the degassing sealing portion 122 and the lead sealing portion 121. The degassing sealing portion 122 may be located at a side of the cup portion 110 opposite the folding portion , and the lead sealing portion 121 may be extended from the end portion of the degassing sealing portion 122 to the folding portion.

The part of the side portion 120 having the predetermined width may undergo an additional process to reduce the width. This is because it is necessary to reduce the width of the side portion 120 to reduce the total width of the secondary battery B. The volumetric energy density may be increased by reducing the width of the secondary battery B. More specifically, the degassing sealing portion 122 may be configured to reduce the width by folding at least once.

In addition, in the foregoing description, the cup portion 110, the side portion 120, the folding portion , the degassing sealing portion 122 or the lead sealing portion 121 that may be included in the pouch film have used the same name as the name of the components of the battery case 100 formed based on the pouch film. One name does not indicate one component, and the names may be differently interpreted depending on the context.

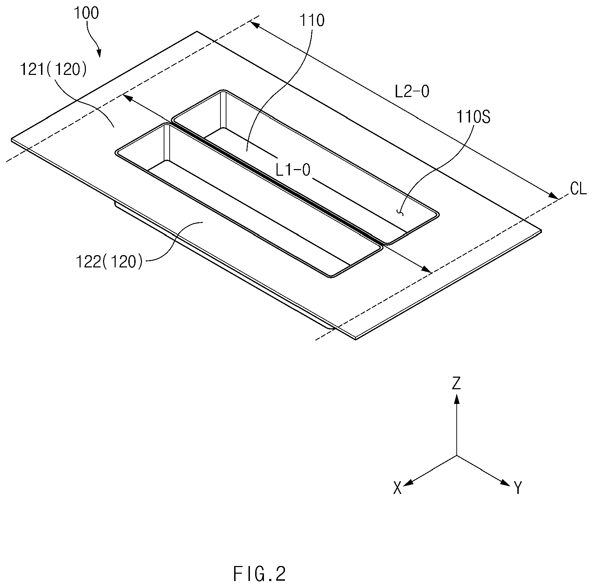

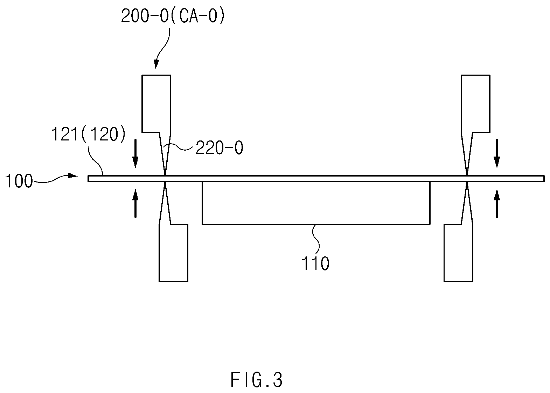

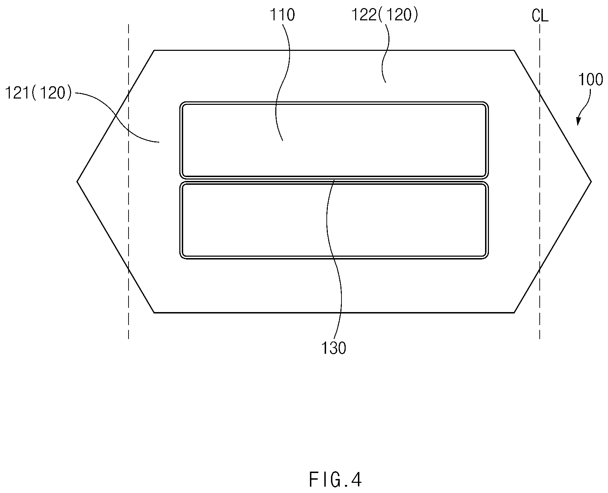

FIG. 2 is a perspective view showing that the battery case 100 shown in FIG. 1 is cut by a conventional pouch cutting apparatus CA. FIG. 3 is a cross-sectional view showing the battery case 100 and the conventional pouch cutting apparatus CA shown in FIG. 2. FIG. 4 is a plan view showing the cut battery case 100 when the battery case 100 is cut by the conventional pouch cutting apparatus CA shown in FIG. 3.

FIG. 2 is a perspective view showing the battery case 100 of the secondary battery shown in FIG. 1 before it is cut by the conventional pouch cutting apparatus CA-0. FIG. 3 is a schematic diagram showing the battery case 100 and the conventional pouch cutting apparatus CA-0 shown in FIG. 2. FIG. 4 is a plan view of the battery case 100 showing a cutting line CL that is cut by the conventional pouch cutting apparatus CA-0 shown in FIG. 3.

The conventional pouch cutting apparatus CA-0 will be described with reference to FIGS. 2 to 4.

For reference, although the drawings are shown and the following description is made on the basis of the pouch as an example of the battery case 100, when the battery case 100 has a similar structure to the structure described below, it may be viewed that the aspect of the present disclosure is equally applied. Accordingly, although the battery case 100 shown in the drawings is shown according to the shape of the pouch on the assumption of the pouch, it is named as the battery case 100 in the present disclosure. In addition, despite the name, the pouch cutting apparatus CA in the present disclosure may be used for cutting the pouch as well as the battery case 100.

As shown in FIG. 2, the side portion 120 of the battery case 100 may be cut along the cutting line CL. In particular, as the length of the degassing sealing portion 122 may be properly cut by the cutting process after gas removal in the subsequent process, a part of the side portion 120 of the battery case 100 that is cut before sealing may be the lead sealing portion 121. The lead sealing portion 121 may be properly cut so that the electrode lead 12 may be protruded. The lead sealing portion 121 may be cut in a direction parallel to the short side of the cup portion 110.

As shown in FIG. 3, the conventional pouch cutting apparatus CA-0 may be configured to cut the side portion 120 of the battery case 100. The conventional pouch cutting apparatus CA may include a cutter 200-0 configured to cut the side portion 120 of the battery case 100, especially the lead sealing portion 121. The cutter 200-0 may include a blade portion 220-0 having a smaller cross sectional area toward the end portion. The blade portion 220-0 may have a sharp tip. The blade portion 220-0 may move closer to the side portion 120 to cut the side portion 120. In this instance, the blade portion 220 may include a pair of blade portions 220-0 positioned at upper and lower locations facing each other, and the pair of blade portions 220-0 may cut the side portion 120 located between them when they contact each other.

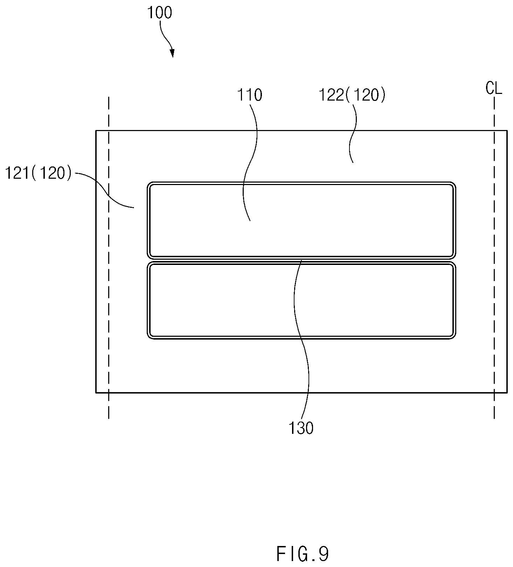

However, as shown in FIG. 3, when the cutter 200-0 cuts the side portion 120 of the battery case 100, like the battery case 100 shown in FIG. 4, curl may occur at the edge of the side portion 120. The curl occurring in the side portion 120 may occur when the corner of the side portion 120 curls towards the cup portion 110 as shown in FIG. 4. When curl occurs in the side portion 120, the side portion 120 may not be cut into a preset size. For reference, although FIG. 2 does not show the curl in the side portion 120 of the battery case 100, FIG. 4 shows the curl in the side portion 120 of the battery case 100, so the inclined edge is shown in the plan view. In particular, like the following description, as the battery case 100 shown in FIG. 9 to which the aspect of the present disclosure was applied is supported by the guide 300, curling in the side portion 120 is prevented, so the uninclined side portion 120 is shown in FIG. 9.

To observe this, when cutting the side portion 120 by the conventional pouch cutting apparatus CA, an experiment was performed to investigate L1-0 length and L2-0 length shown in FIG. 2.

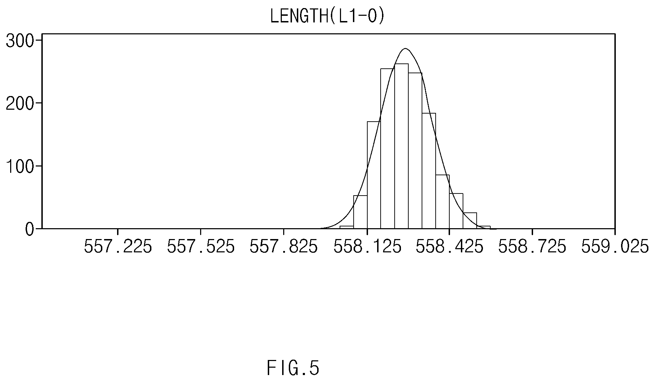

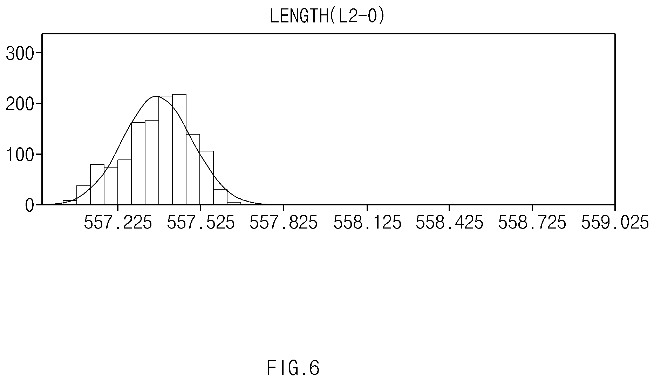

FIG. 5 is a graph showing L1-0 length distribution of the battery case 100 when the battery case 100 shown in FIG. 2 is cut by the cutting line CL. FIG. 6 is a graph showing L2-0 length distribution of the battery case 100 when the battery case 100 shown in FIG. 2 is cut by the cutting line CL.

The results of investigating the length of the battery case 100 cut by the conventional pouch cutting apparatus CA will be described with reference to FIGS. 5 and 6.

As shown below, there was a difference between the L1-0 length and the L2-0 length in average value.

**[TABLE 1]**

| | L1-0 | L2-0 |
|---|---|---|
| Average length (mm) | 558.24 | 557.40 |

In general, the length corresponding to L2-0 resulting from the reduction in total length due to curling was smaller than L1-0.

Further, when comparing L1-0 distribution with L2-0 distribution, L2-0 distribution was more spread out. Because it is difficult to control curling, the length corresponding to L2-0 was measured over a wider range. This hinders consistent quality.

Further, in the capability of process of L1-0, the Cpk value is as high as 2.654, while the Cpk value of L2-0 is as low as 1.442. The Cpk value is generally evaluated as good when it is larger than 1.69, so it was confirmed that it is necessary to improve the Cpk value of L2-0 (Cpk is the commonly used index, and its description is omitted).

To sum, by the curl in the outer part of the lead sealing portion 121 contributing to L2-0, the battery case 100 may not be formed with the intended length and may not keep the length constant.

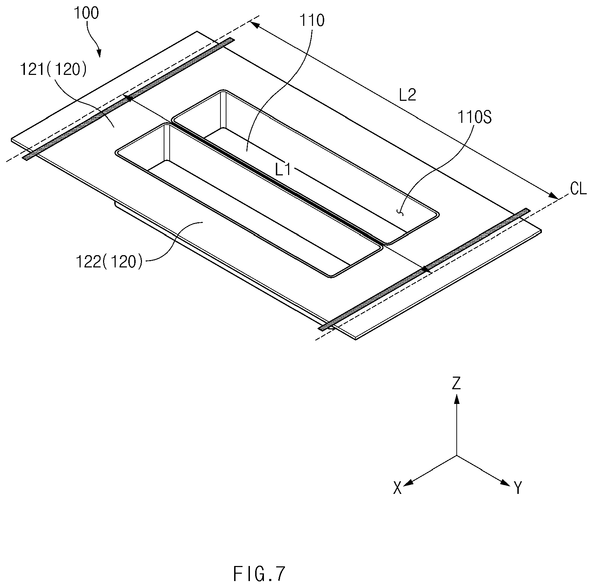

The present disclosure addresses this issue. According to the following aspect, it is directed to minimizing the length difference between L1 and L2 shown in FIG. 7 and narrowing L2 distribution.

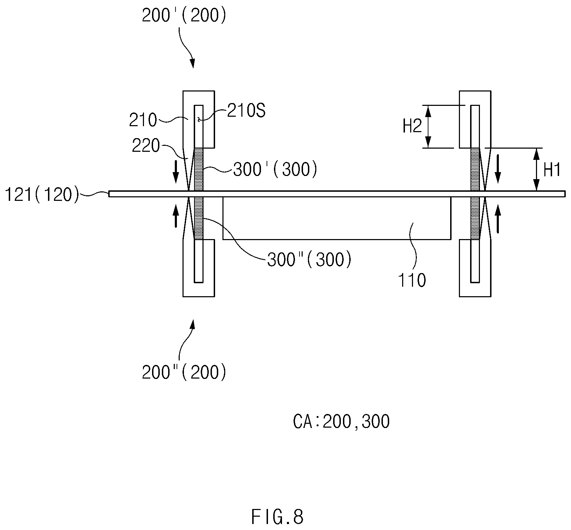

FIG. 7 is a perspective view showing that the battery case 100 shown in FIG. 1 is cut by a pouch cutting apparatus CA according to a first embodiment. FIG. 8 is a cross-sectional view showing the battery case 100 shown in FIG. 7 and the pouch cutting apparatus CA according to the first embodiment. FIG. 9 is a plan view showing the cut battery case 100 when the battery case 100 is cut by the pouch cutting apparatus CA according to the first embodiment shown in FIG. 8.

The pouch cutting apparatus CA according to the first embodiment of the present disclosure will be described with reference to FIGS. 7 to 9.

The pouch cutting apparatus CA may be configured to cut the pouch including the cup portion 110 and the side portion 120 extended from the cup portion 110. More specifically, the pouch cutting apparatus CA may include the cutter 200 configured to cut the side portion 120, and the guide 300 configured to hold the side portion 120 while the cutter 200 cuts the side portion 120. It may be possible to prevent curl from occurring in the corner of the side portion 120 during the side cutting, thereby reducing the length difference in the side portion 120.

More specifically, the cutter 200 may include the blade portion 220 having a smaller cross sectional area toward the end portion. While the cutter 200 cuts the side portion 120, the guide 300 may be located adjacent to the blade portion 220. The end portion of the side portion 120 located at the outer side of the guide 300 may curl towards the guide 300, and the guide 300 may support the side portion 120 to prevent curling inwards the guide 300. Accordingly, curling may occur up to the location adjacent to the guide 300. When the cutter 200 and the guide 300 are located adjacent to each other, it may be possible to prevent the side portion 120 from starting to curl near the cutting location of the cutter 200, and thus the guide 300 may be preferably located adjacent to the cutter 200, especially the blade portion 220. For example, on the basis of the guide 300 on the left side of FIG. 8, the end portion of the lead sealing portion 121 located on the left side of the guide 300 may curl rightwards. However, it may be possible to prevent curl from occurring between the point of contact of the guide 300 with the lead sealing portion 121 and the cup portion 110. Accordingly, when the blade portion 220 and the guide 300 are located adjacent to each other, it may be possible to minimize curling occurrence at the cutting location of the blade portion 220.

The guide 300 may include a first guide 300' and a second guide 300" located in contact with the opposite surfaces of the side portion 120, respectively. For example, as shown in FIG. 8, the first guide 300' may support the lead sealing portion 121 from above the lead sealing portion 121, and the second guide 300" may support the lead sealing portion 121 from below the lead sealing portion 121. That is, the lead sealing portion 121 may be located between the first guide 300' and the second guide 300". When the lead sealing portion 121 bends, curl may occur, and the first guide 300' and the second guide 300" may support the lead sealing portion 121 to prevent the lead sealing portion 121 from bending, thereby preventing curl from occurring in the lead sealing portion 121.

Further, for convenience of understanding, the description of the side portion 120 described below may be understood as the description of the lead sealing portion 121. As mentioned above, as the degassing sealing portion 122 may be cut again in the subsequent process, it may be difficult to provide the surprising effect by the application of the aspect of the present disclosure. When the lead sealing portion 121 that did not undergo the cutting process in the subsequent process is used in the pouch cutting apparatus CA to which the aspect of the present disclosure was applied, the effect of the aspect of the present disclosure may be effectively provided. Accordingly, hereinafter, the side portion 120 may be understood as the lead sealing portion 121. However, the degassing sealing portion 122 may also need to be cut first, so the aspect of the present disclosure may be applied to the degassing sealing portion 122.

After the guide 300 holds the side portion 120, the cutter 200 may cut the side portion 120. In the order of the cutting process of the cutter 200 and the process in which the guide 300 holds the side portion 120, the process in which the guide 300 holds the side portion 120 may be performed first. When the holding process is performed first, the side portion 120 may be flattened suitably for cutting.

The guide 300 may be located closer to the cup portion 110 than the blade portion 220. When the side portion 120 is cut by the blade portion 220, curl may occur in the cut side portion 120 again. When curl occurs in the side portion 120, there may be inconvenience in performing the subsequent process, so there is a need to prevent it. The curl occurring in the side portion 120 may occur when the end portion of the side portion 120 curls towards the cup portion 110, so it may be necessary that the cutting line CL be farther away from the cup portion 110 than the guide 300. When the guide 300 is located farther away from the cup portion 110 than the cutting line CL, it may be impossible to prevent the cut portion from moving toward the cup portion 110, and curl may occur in the cut side portion 120 again. As the cutting line CL may be formed by the blade portion 220, it may be desirable that the guide 300 is located closer to the cup portion 110 than the blade portion 220. That is, the guide 300 may be adjacent to the blade portion 220 to prevent curl from occurring near the cutting line CL, and at the same time, may be closer to the cup portion 110 than the blade portion 220 to prevent the side portion 120 from additionally curling after cutting.

While the guide 300 holds the side portion 120, the cutter 200 may move in the cutting direction perpendicular to the extension direction of the side portion 120 to cut the side portion 120. For example, as shown in FIG. 8, the cutting direction may be a top-bottom direction. The extension direction of the side portion 120 may be a left-right direction. This is because applying the force for cutting in a direction perpendicular to the object to cut is the most effective.

The cutter 200 may have a guide accommodation space 210S for accommodating the guide 300. More specifically, the cutter 200 may include a cutter body 210 from which the blade portion 220 is extended, and the cutter body 210 may have the guide accommodation space 210S. The cutter body 210 may have a larger width than the blade portion 220. This is because the cutter body 210 may be mounted on a device that moves the cutter 200. The blade portion 220 may be protruded from the cutter body 210. In particular, as shown in FIG. 8, the blade portion 220 may be protruded downward from the cutter body 210. The space may be formed between the side of the cutter body 210 where the blade portion 220 is not protruded and the end portion of the blade portion 220, and to place the guide 300 closest to the blade portion 220, the guide 300 may be accommodated in the space. For example, describing the components adjacent to the first guide 300' located on the left side in FIG. 8, a space may be formed below the cutter body 210 on the left side of the blade portion 220, and the guide 300 may be located in the space. In this positional relationship, the cutter body 210 may be located on the guide 300. The blade portion 220 may move down to cut the side portion 120, so the blade portion 220 may need to move. The downward movement of the blade portion 220 may refer to the downward movement of the cutter body 210 integrally formed with the blade portion 220. While the cutter body 210 moves down, in the case where the cutter body 210 does not have the guide accommodation space 210S, the cutter body 210 may contact the guide 300, and the movement of the cutter body 210 and the blade portion 220 may be hindered. To prevent this, the guide 300 may be inserted into the guide accommodation space 210S while the cutter 200 moves in the cutting direction.

The guide accommodation space 210S may have a height H2 that is equal to or larger than a height H1 of the guide 300 in the cutting direction. While the blade portion 220 moves, the guide accommodation space 210S may completely accommodate the guide 300 in the guide accommodation space 210S.

In this instance, the guide accommodation space 210S may have a width that is equal to or larger than the width of the guide 300. Preferably, the guide accommodation space 210S may have the width corresponding to the width of the guide 300. The guide accommodation space 210S may accommodate the guide 300 in the guide accommodation space 210S.

The lead sealing portion 121 may include a pair of lead sealing portions 121 extended from the opposite sides of the cup portion 110, respectively. The guide 300 may include a pair of guides 300 to hold the pair of lead sealing portions 121, respectively. For example, as shown in FIG. 8, the guide 300 may include a pair of guides 300 to support the opposite sides of the lead sealing portion 121, respectively, and another pair of guides 300 to support the lead sealing portions 121 extended in the opposite directions with regard to the cup portion 110, totaling four guides 300. The side portion 120 may include the lead sealing portion 121 extended along the short side of the cup portion 110 and the degassing sealing portion 122 extended along the long side of the cup portion 110, and when the guide 300 supports the lead sealing portion 121, the guide 300 may be located to be extended along the short side of the cup portion 110 that is the extension direction of the lead sealing portion 121. When the guide 300 supports the degassing sealing portion 122, the guide 300 may be located to be extended along the long side of the cup portion 110 that is the extension direction of the degassing sealing portion 122.

The guide 300 may move to prevent curl in the side portion 120 more effectively. Hereinafter, the movement of the guide 300 will be described.

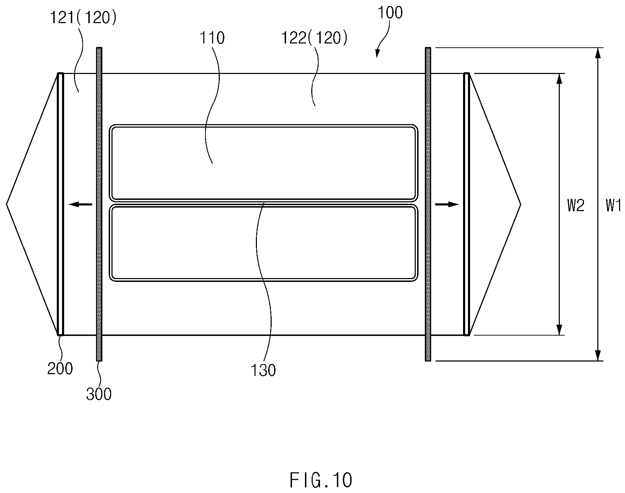

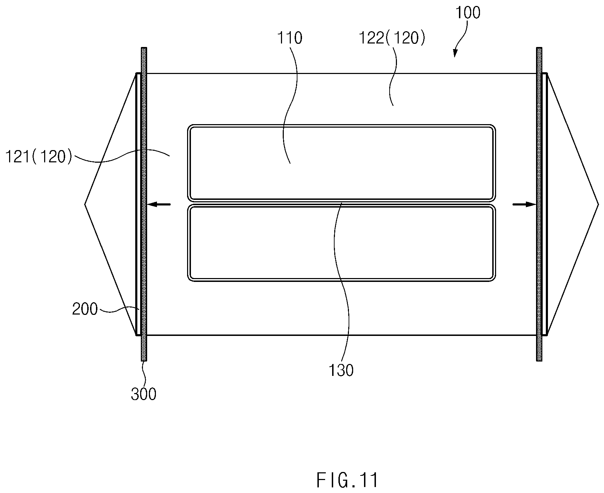

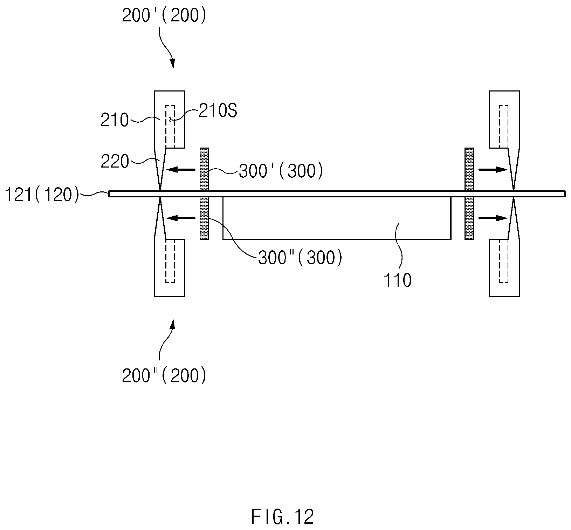

FIG. 10 is a plan view showing that the guide 300 of the pouch cutting apparatus CA shown in FIG. 7 is in a holding preparation position. FIG. 11 is a plan view showing that the guide 300 of the pouch cutting apparatus CA shown in FIG. 10 is in a holding position. FIG. 12 is a side view showing that the guide 300 of the pouch cutting apparatus CA shown in FIG. 10 is in the holding preparation position.

The pouch cutting apparatus CA according to the first embodiment of the present disclosure will be described in further detail with reference to FIGS. 10 to 12.

The guide 300 may be configured to move to the holding preparation position adjacent to the cup portion 110 and the holding position adjacent to the blade portion 220. For example, the position of the guide 300 shown in FIG. 10 may be the holding preparation position, and the position of the guide 300 shown in FIG. 11 may be the holding position.

While the guide 300 is in the holding position, the cutter 200 may cut the side portion 120. After the guide 300 is moved to the intended location, the cutter 200 may cut the side portion 120 so that the guide 300 is located adjacent to the blade portion 220 of the cutter 200. Thus, while the guide 300 is in the holding preparation position, the cutter 200 may not cut the side portion 120.

The guide 300 may move in contact with the side portion 120 while the guide 300 moves from the holding preparation position to the holding position. While the guide 300 moves in contact with the side portion 120, the guide 300 may move, while pushing a part of the side portion 120 in which curl may occur outwards from the cup portion 110, to flatten the side portion 120. When cutting the flat side portion 120, the cutter 200 may cut the side portion 120 into a length close to the preset length of the side portion 120.

The guide 300 may slidably move while the guide 300 moves from the holding preparation position to the holding position. The guide 300 may move from the holding preparation position to the holding position through a curved path, but to minimize the movement time, the guide 300 may move in contact with the side portion 120 from the holding preparation position to the holding position through a straight line path.

The guide 300 may be extended in the length direction, and in the length direction of the guide 300, the length of the side portion 120 may be equal to or smaller than the length of the guide 300. Accordingly, while the guide 300 moves from the holding preparation position to the holding position, the guide 300 may move while supporting the outer side of the lead sealing portion 121. Here, the holding position of the guide 300 may be a position adjacent to the blade portion 220, and the holding preparation position of the guide 300 may refer to a position at which the guide 300 is located closer to the cup portion 110 than the holding position.

For example, as shown in FIGS. 10 and 11, the lead sealing portion 121 located on upper and lower sides in the drawings and located on the left and right sides in a preset direction may be flattened when it contacts the guide 300 with the movement of the guide 300.

Hereinafter, different embodiment(s) from the first embodiment will be described. The common description to the first embodiment and the other embodiment(s) is omitted and the other embodiment(s) will be described based on difference(s). That is, it is obvious that when a certain description not mentioned in the other embodiments is necessary, the description of the first embodiment may make up for the description.

### Second embodiment

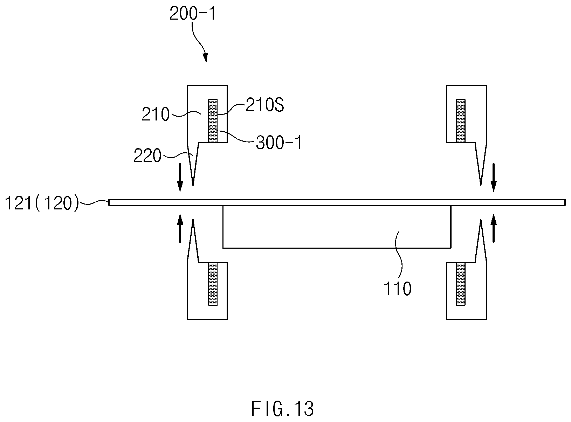

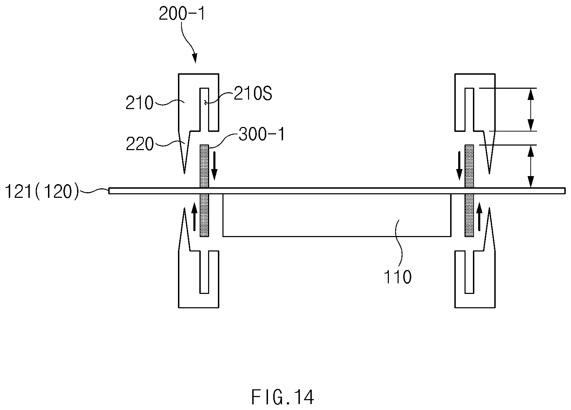

FIG. 13 is a side view showing that the guide 300 of the pouch cutting apparatus CA according to the second embodiment is in the holding preparation position. FIG. 14 is a side view showing that the guide 300 of the pouch cutting apparatus CA shown in FIG. 13 is in the holding position.

The pouch cutting apparatus CA according to the second embodiment will be described with reference to FIGS. 13 and 14.

The pouch cutting apparatus CA according to the second embodiment is different from the first embodiment in that the guide 300 is located in the guide accommodation space 210S of the cutter 200 while it is in the holding preparation position. That is to say, the guide 300 may be accommodated in the guide accommodation space 210S of the cutter 200 to move with the cutter 200 before holding the side portion 120.

In the second embodiment, the guide 300 may be located as shown in FIG. 13 in the holding preparation position, and may be located as shown in FIG. 14 in the holding position. That is, the guide 300 may move with the cutter 200, and when the guide 300 is located adjacent to the location at which the guide 300 is supposed to support the side portion 120, the guide 300 may move separately from the cutter 200 and support the side portion 120, and then the cutter 200 may move to cut the side portion 120. For example, as shown in FIG. 13 and 14, the cutter 200 and the guide 300 may move together until the blade portion 220 is located on the cutting line CL of the side portion 120, and subsequently, only the guide 300 may move down to support the side portion 120. Subsequently, the cutter 200 may move down to cut the side portion 120.

The guide 300 may move in the cutting direction along the extension direction of the guide accommodation space 210S to hold the side portion 120.

### Third embodiment

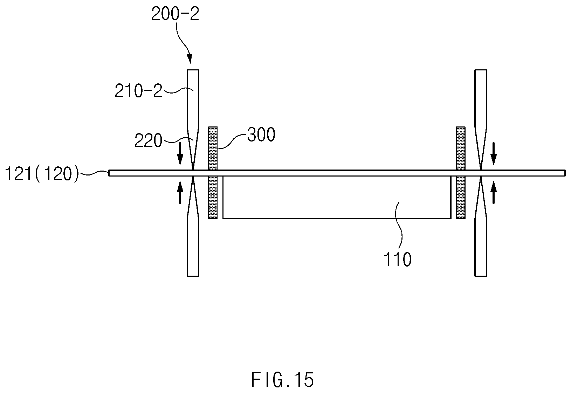

FIG. 15 is a side view showing the pouch cutting apparatus CA according to the third embodiment and the battery case 100.

The pouch cutting apparatus CA according to the third embodiment of the present disclosure will be described with reference to FIG. 15.

The pouch cutting apparatus CA according to the third embodiment has a smaller width of the cutter body 210 than the pouch cutting apparatus CA according to the first embodiment. The width of the cutter body 210 may be set to prevent the guide 300 from being located below the cutter body 210. In this case, when the cutter 200 moves in the cutting direction, interference with the guide 300 may be prevented. When there is no interference with the guide 300, there is no need for the guide accommodation space 210S in the cutter 200, and the guide accommodation space 210S may not be formed.

The cutter 200 may be extended in a direction as shown in FIG. 15.

### Fourth embodiment

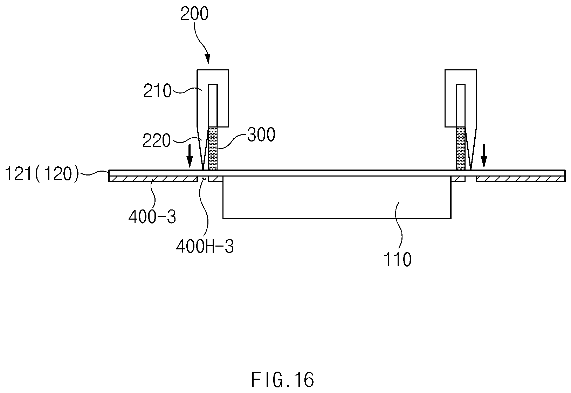

FIG. 16 is a side view showing the pouch cutting apparatus CA according to the fourth embodiment and the battery case 100.

The pouch cutting apparatus CA according to the fourth embodiment of the present disclosure will be described with reference to FIG. 16.

As opposed to the first embodiment, the pouch cutting apparatus CA according to the fourth embodiment does not include the pair of upper and lower cutters 200 and the pair of upper and lower guides 300. A support member 400 may be provided on the opposite side to the cutter 200 and the guide 300 of the fourth embodiment. The support member 400 may be located on the side of the side portion 120 opposite the cutter 200 to prevent the side portion 120 from being pushed back and uncut while the cutter 200 moves to cut the side portion 120. For example, as shown in FIG. 16, the cutter 200 may be located at the upper side of the side portion 120, and the support member 400 may be located at the lower side of the side portion 120. In this instance, the support member 400 may have a through-hole 400H, through which the blade portion 220 can pass, at a location corresponding to the location of the blade portion 220. The support member 400 may play a similar role to the guide 300 to prevent the side portion 120 from curling together with the guide 300.

### Fifth embodiment

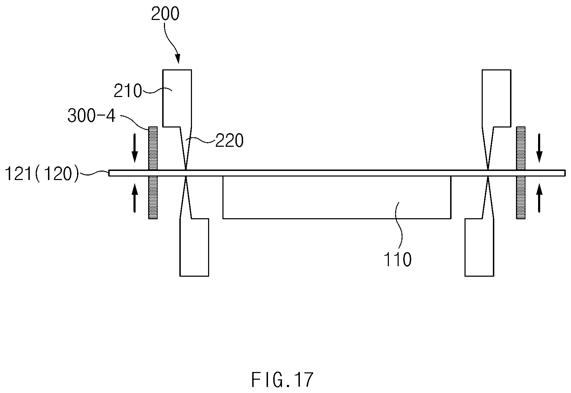

FIG. 17 is a side view showing the pouch cutting apparatus CA according to the fifth embodiment and the battery case 100.

The pouch cutting apparatus CA according to the fifth embodiment of the present disclosure will be described with reference to FIG. 17.

The pouch cutting apparatus CA according to the fifth embodiment is different from the first embodiment in that the side is farther away from the cup portion 110 than the blade portion 220.

The guide 300 located as in the fifth embodiment may support the side portion 120 during the cutting of the side portion 120 in the same way as the first embodiment. The first embodiment cannot be applied to the case where the blade portion 220 is located so close to the cup portion 110 that the guide 300 cannot be located between the cup portion 110 and the blade portion 220, but the fifth embodiment may be more advantageous than the first embodiment in that the fifth embodiment can be carried out even though the blade portion 220 is located in contact with the cup portion 110, because the guide 300 is located at the outer side of the cup portion 110 than the blade portion 220.

### Sixth embodiment

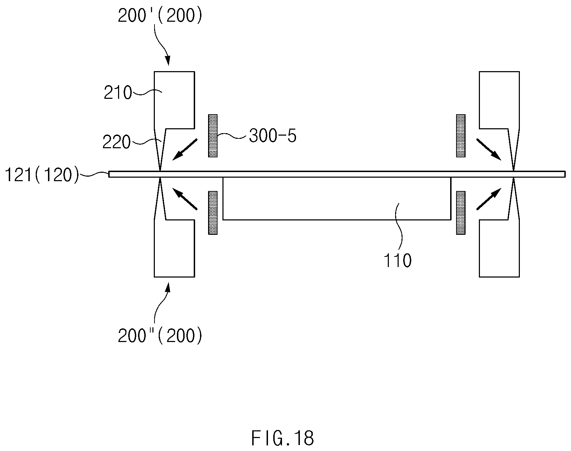

FIG. 18 is a side view showing the pouch cutting apparatus CA according to the sixth embodiment and the battery case 100.

The pouch cutting apparatus CA according to the sixth embodiment of the present disclosure will be described with reference to FIG. 18.

The pouch cutting apparatus CA according to the sixth embodiment is different from the first embodiment in that the guide 300 is located apart from the side portion 120 when it is in the holding preparation position. The guide 300 may be disposed at a location that is easy to store and only support the side portion 120 during the cutting of the side portion 120 to prevent the side portion 120 from curling. Accordingly, the guide 300 may not necessarily contact the side portion 120 in the holding preparation position to achieve the aspect of the present disclosure.

### Seventh embodiment

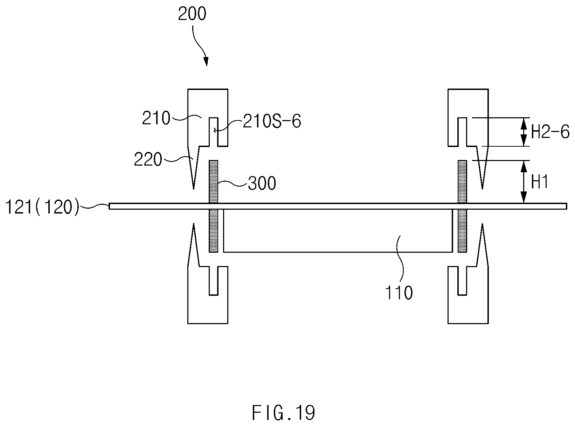

FIG. 19 is a side view showing the pouch cutting apparatus CA according to the seventh embodiment and the battery case 100.

The pouch cutting apparatus CA according to the seventh embodiment of the present disclosure will be described with reference to FIG. 19.

The pouch cutting apparatus CA according to the seventh embodiment is different from the first embodiment in that the height of the guide accommodation space 210S is shorter than the height of the guide 300. When the blade portion 220 is enough long, collision with the guide 300 by the movement of the cutter 200 may not occur.

### Eighth embodiment

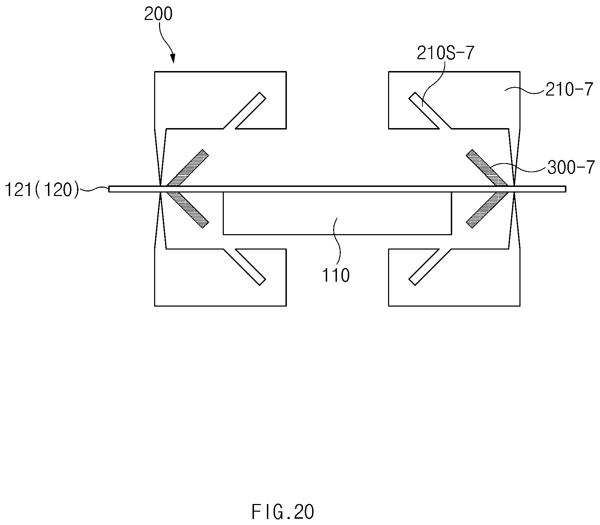

FIG. 20 is a side view showing the pouch cutting apparatus CA according to the eighth embodiment and the battery case 100.

The pouch cutting apparatus CA according to the eighth embodiment of the present disclosure will be described with reference to FIG. 20.

The pouch cutting apparatus CA according to the eighth embodiment is different from the first embodiment in that the extension direction of the guide 300 has a predetermined angle with the side portion 120, and the guide accommodation space 210S of the cutter body 210-7 is extended parallel to the extension direction of the guide 300, so the extension direction of the guide accommodation space 210S also has the predetermined angle with the side portion 120.

### Ninth embodiment

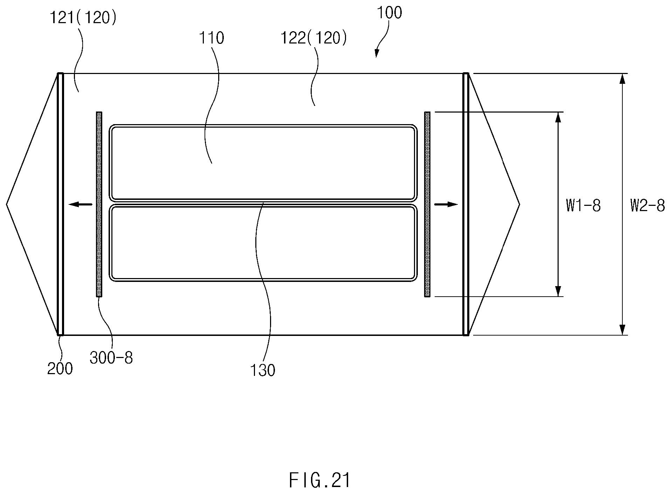

FIG. 21 is a plan view showing the pouch cutting apparatus CA according to the ninth embodiment and the battery case 100.

The pouch cutting apparatus CA according to the ninth embodiment of the present disclosure will be described with reference to FIG. 21.

The pouch cutting apparatus CA according to the ninth embodiment is different from the first embodiment in that the width of the guide 300 is equal to or smaller than the width of the lead sealing portion 121. When the guide 300 is located adjacent to the edge of the lead sealing portion 121, even though the guide 300 does not necessarily support the edge of the lead sealing portion 121, the guide 300 may prevent the lead sealing portion 121 from curling.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical aspect of the present disclosure and the appended claims and their equivalent scope.

## Claims

1. A pouch cutting apparatus for cutting a pouch including a cup portion and a side portion extended from the cup portion, the pouch cutting apparatus comprising:
a cutter including a blade portion having a smaller cross sectional area toward an end portion that is configured to cut the side portion; and
a guide located adjacent to the blade portion to hold the side portion while the cutter cuts the side portion.

2. The pouch cutting apparatus according to claim 1,
wherein the guide includes a first guide and a second guide configured to be located in contact with surfaces located at opposite sides of the side portion, respectively.

3. The pouch cutting apparatus according to claim **1,**
wherein the cutter cuts the side portion after the guide holds the side portion.

4. The pouch cutting apparatus according to claim **1,**
wherein the guide is located closer to the cup portion than the blade portion.

5. The pouch cutting apparatus according to claim 1,
wherein the guide is configured to move to:
a holding preparation position adjacent to the cup portion; and
a holding position adjacent to the blade portion, and
wherein the cutter cuts the side portion while the guide is in the holding position.

6. The pouch cutting apparatus according to claim 5,
wherein the guide moves in contact with the side portion while the guide moves from the holding preparation position to the holding position.

7. The pouch cutting apparatus according to claim 5,
wherein the guide slidably moves while the guide moves from the holding preparation position to the holding position.

8. The pouch cutting apparatus according to claim 1,
wherein the guide is extended in a length direction, and
wherein a length of the side portion in the length direction of the guide is equal to or smaller than the length of the guide.

9. The pouch cutting apparatus according to claim 1,
wherein the cutter moves in a cutting direction to cut the side portion while the guide holds the side portion, the cutting direction being perpendicular to an extension direction of the side portion.

10. The pouch cutting apparatus according to claim 9,
wherein the cutter has a guide accommodation space for accommodating the guide, and
wherein the guide is inserted into the guide accommodation space while the cutter moves in the cutting direction.

11. The pouch cutting apparatus according to claim 10,
wherein the guide accommodation space has a height that is equal to or larger than a height of the guide in the cutting direction.

12. The pouch cutting apparatus according to claim 10,
wherein the guide accommodation space has a width corresponding to a width of the guide.

13. The pouch cutting apparatus according to claim 9,
wherein the guide is accommodated in a guide accommodation space of the cutter to move with the cutter before holding the side portion.

14. The pouch cutting apparatus according to claim 13,
wherein the guide is configured to move in the cutting direction along an extension direction of the guide accommodation space to hold the side portion.

15. The pouch cutting apparatus according to claim 1,
wherein the side portion includes:
a lead sealing portion extended along a short side of the cup portion; and
a degassing sealing portion extended along a long side of the cup portion,
wherein the lead sealing portion includes a pair of lead sealing portions extended from opposite sides of the cup portion, respectively, and
wherein the guide includes a pair of guides configured to hold the pair of lead sealing portions, respectively.

16. A pouch cutting apparatus for cutting a pouch including a cup portion and a side portion extended from the cup portion, the pouch cutting apparatus comprising:
a cutter configured to cut the side portion; and
a guide configured to contact the side portion to hold the side portion while the cutter cuts the side portion,
wherein the guide is configured to move to:
a holding preparation position adjacent to the cup portion; and
a holding position adjacent to the cutter to hold the side portion while the cutter cuts the side portion.

17. The pouch cutting apparatus according to claim 16,
wherein the guide moves in contact with the side portion while the guide moves from the holding preparation position to the holding position.

18. The pouch cutting apparatus according to claim 16,
wherein the guide slidably moves while the guide moves from the holding preparation position to the holding position.

19. The pouch cutting apparatus according to claim 16,
wherein the guide has a width that is equal to or larger than a width of the side portion.

20. A pouch cutting apparatus for cutting a pouch including a cup portion and a side portion extended from the cup portion, the pouch cutting apparatus comprising:
a cutter configured to cut the side portion; and
a guide configured to contact the side portion to hold the side portion while the cutter cuts the side portion,
wherein the guide is accommodated in a guide accommodation space of the cutter to move with the cutter before holding the side portion.
